(19) Europäisches Patentamt
European Patent Office
Office européen des brevets

(11) **EP 1 494 386 B1**

(12) **EUROPEAN PATENT SPECIFICATION**

(45) Date of publication and mention
of the grant of the patent:
**22.04.2015 Bulletin 2015/17**

(51) Int Cl.:
***H04L 27/00*** *(2006.01)*

(21) Application number: **04015619.2**

(22) Date of filing: **02.07.2004**

(54) **Improved measurement of frequency difference between a transmitter and a receiver in a mobile communication system**

Verbesserte Messung der Frequenzdifferenz zwischen einem Sender und einem Empfänger in einem mobilen Kommunikationssystem

Mesure améliorée de différence fréquencielle entre un transmitteur et un recepteur dans un système de communication mobile

(84) Designated Contracting States:
**AT BE BG CH CY CZ DE DK EE ES FI FR GB GR HU IE IT LI LU MC NL PL PT RO SE SI SK TR**

(30) Priority: **04.07.2003 KR 2003045342**

(43) Date of publication of application:
**05.01.2005 Bulletin 2005/01**

(73) Proprietor: **LG Electronics Inc.**
**Seoul 150-721 (KR)**

(72) Inventor: **Kim, Young Jae**
**Dongan-gu**
**Anyang (KR)**

(74) Representative: **Katérle, Axel et al**
**Wuesthoff & Wuesthoff**
**Patent- und Rechtsanwälte**
**Schweigerstraße 2**
**81541 München (DE)**

(56) References cited:
**WO-A-01/86904          US-A- 5 654 982**
**US-A- 5 982 809**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

FIELD OF THE INVENTION

The present invention relates to a mobile communication system and, more particularly, to a frequency difference measuring method in a mobile communication system of a TDD (Time Division Duplex).

DESCRIPTION OF THE RELATED ART

Generally, in a mobile communication system, a sending side transmits and a receiving side receives a signal at a predetermined frequency generated through a frequency generator. The frequency of the transmitted/received signal is not identical to the predetermined frequency due to changes in characteristics of the frequency generator according to environmental factors and Doppler effect from movement of a mobile communication terminal.

Thus, the receiving side of the mobile communication system needs to receive the signal by minimizing a difference between transmission frequency and reception frequency, in order to prevent degradation of performance of the mobile communication system.

US 5,982,809 discloses a system and method for determining and tracking the carrier offset in a communications system. Sampled spread spectrum digital signals are compensated with an expected carrier offset and stripped of pseudo-noise codes to produce demodulated signals. The demodulated signals are applied to a carrier offset estimator. The carrier offset estimator divides pairs of demodulated signal with a predetermined interval to produce results containing phase change information. The results are averaged, and the average is normalized with respect to the predetermined interval to yield a new estimate of the carrier offset.

WO 01/86904 A1 discloses a method and apparatus for estimating a frequency offset between a carrier frequency of a transmitter and a local frequency reference of a receiver in a communication system. Successive samples of a frequency synchronization signal transmitted by the transmitter and detected by the receiver are collected, and a phase difference is computed between the successively collected samples. The frequency synchronization signal can be a non-sinusoidal signal, e.g. a pilot symbol and/or data employed as pilot symbol. Phase differences of successively collected samples are computed until N-1 phase differences have been computed. The N-1 phase differences are added to produce the estimated frequency offset. Adding may be performed using linear regression or by commuting a weighted average.

SUMMARY OF THE INVENTION

An object of the invention is to solve at least the above problems and/or disadvantages and to provide at least the advantages described hereinafter.

Another object of the present invention is to provide a frequency difference measuring method and apparatus capable of accurately measuring an average frequency difference value between a transmission frequency and a reception frequency based on phase change values by calculating the phase change values on the basis of a predetermined sample interval.

To achieve at least these objects and other advantages in a whole or in part and in accordance with the purpose of the present invention, as embodied and broadly described herein, there is provided a frequency difference measuring method according to claim 1. Further details of said method are provided in claims 2-6.

To achieve at least these objects and other advantages and in accordance with the purpose of the present invention, as embodied and broadly described herein, there is also provided a mobile communication system according to claim 7.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

BRIEF DESCRIPTION OF THE DRAWINGS

The invention will be described in detail with reference to the following drawings in which like reference numerals refer to like elements wherein:

Figure 1 is a schematic block diagram of a general frequency difference measuring apparatus having an AFC (Automatic Frequency Control) structure;

Figure 2 is a graph showing a phase change of a demodulated signal;

Figure 3 is a graph showing a principle of calculating a phase change value;

Figure 4 is a flow chart of a frequency difference measuring method in accordance with an embodiment of the present invention; and

Figure 5 is a graph showing a principle of calculating a phase change value in accordance with an embodiment of the present invention.

## DETAILED DESCRIPTION OF THE PREFERRED EMBODIMENTS

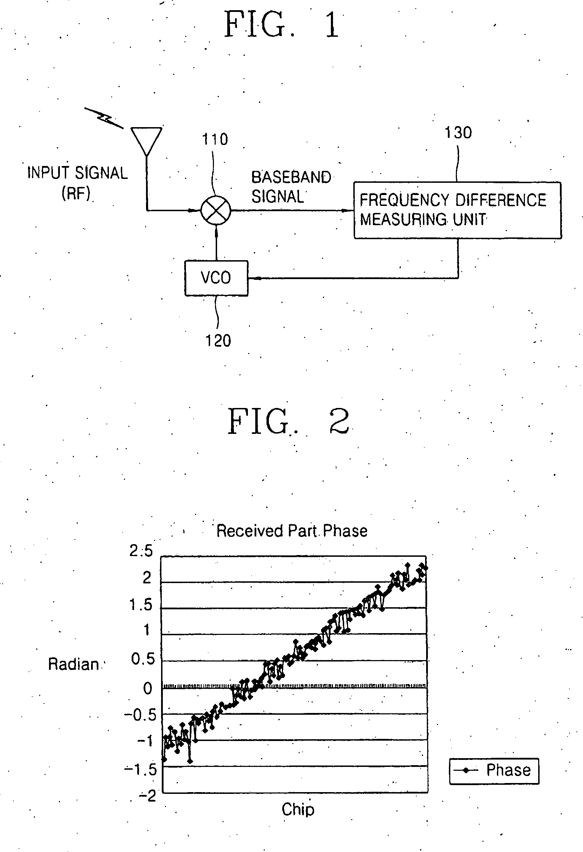

Figure 1 is a block diagram showing a general frequency difference measuring apparatus of an AFC (Automatic Frequency Control) structure.

As shown in Figure 1, the frequency difference measuring apparatus includes a demodulator 110 for demodulating a signal received through an antenna on the basis of an oscillation frequency and outputting a baseband signal; a frequency generator 120 for generating the oscillation frequency inputted to the demodulator 110; and a frequency difference measuring unit 130 for calculating a difference between a frequency of the signal inputted from the demodulator 110 and the oscillation frequency. Preferably, the frequency generator 120 is constructed as a VCO (Voltage Control Oscillator). However, the present invention is not intended to be so limited.

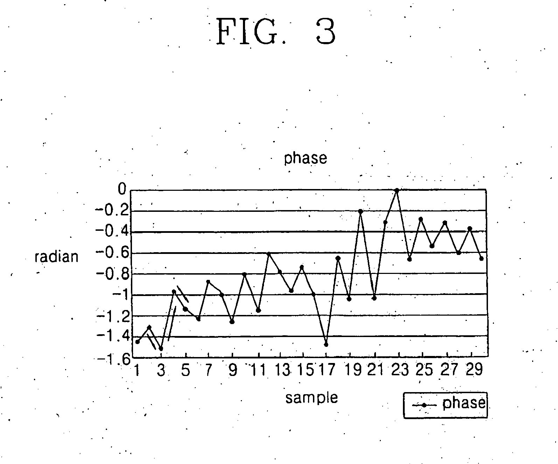

A frequency difference measuring method of the apparatus constructed as described above will now be described with reference to Figures 2 and 3.

The sending side carries and transmits data $s(t)$ on a transmission frequency $f_t$, and the receiving side demodulates the received signal by using the reception frequency $f_r$. A difference value between the transmission frequency $f_t$ and the reception frequency $f_r$ can be defined by equation (1) shown below:

$$f_d = f_t - f_r \text{------------------------------------------------ (1)}$$

In this case, when the transmission frequency $f_t$ and the reception frequency $f_r$ are identical to each other, the receiving side can successfully receive the data $s(t)$.

If, however, the transmission frequency $f_t$ and the reception frequency $f_r$ are not identical, the receiving side would receive data $s(t) \cdot e^{j2\pi f_d t}$, not $s(t)$.

Thus, when the sending side and the receiving side use a well-known signal such as a pilot signal as the data $s(t)$, the receiving side can calculate a phase change value of $e^{j2\pi f_d t}$ of the demodulated signal and measure a difference value $f_d$ between the transmission frequency $f_t$ and the reception frequency $f_r$ on the basis of the obtained phase change value.

First, the receiving side extracts a phase component without the data $s(t)$ from the demodulated signal as expressed in equation (2) shown below:

$$i(t_n) = e^{j2\pi f_d t_n}, \text{ herein } n = 1, 2, \ldots, N \text{------------------------ (2)}$$

The phase change of the phase component will now be described, with reference to Figure 2, which shows a graph of a phase change of a demodulated signal.

As shown in Figure 2, the phase value $2\pi f_d t$ of $e^{j2\pi f_d t}$ of the demodulated signals are displayed roughly linearly according to a time axis. The receiving side can measure the difference value $f_d$ between the transmission frequency $f_t$ and the reception frequency $f_r$ on the basis of the phase change values of the phase component. The principle of calculating the phase change values of the phase component will now be described with reference to Figure 3.

Figure 3 is a graph showing a principle of calculating phase change. As shown in Figure 3, phase change values are calculated among mutually adjacent signals by equation (3) shown below:

$$r(t_n) = i(t_n) \cdot i^*(t_{n+1}) = e^{j2\pi f_d t_n} \cdot e^{-j2\pi f_d t_{n+1}} = e^{j2\pi f_d t_n} \cdot e^{-j2\pi f_d (t_n+1)} = e^{-j2\pi f_d} \text{ -- (3)}$$

A frequency difference value is obtained on the basis of the calculated phase change value by equation (4) shown below:

$$f_{dn} = \frac{1}{2\pi} \tan^{-1}\left(\frac{imag(r(t_n))}{real(r(t_n))}\right) \text{----------------------------} (4)$$

Accordingly, because the N number of frequency difference values are measured on the basis of equation (4), the receiving side averages the measured N number of frequency difference values as shown in equation (5) below, whereby the average value is measured as an average frequency difference value between the transmission frequency and the reception frequency:

$$F_d = \frac{1}{N}\sum_{n=0}^{N} f_{dn} \text{----------------------------} (5)$$

In the frequency difference measuring method, the average frequency difference value between the transmission frequency and the reception frequency is based on the first and the last frequency difference values among the measured N number of frequency difference values.

This can be simplified by equation (6). For example, the N number of phase values for measuring the average difference value can be expressed as shown below:

$$\Phi_0 = 2\pi f_d t_0, \ \Phi_1 = 2\pi f_d t_1, \ \Phi_2 = 2\pi f_d t_2, \ \cdots, \ \Phi_N = 2\pi f_d t_N \text{-------} (6)$$

A phase difference between mutually adjacent signals among the phase values can also be expressed as shown below:

$$\Phi_0 - \Phi_1 = 2\pi f_d t_0 - 2\pi f_d t_1$$

$$\Phi_1 - \Phi_2 = 2\pi f_d t_1 - 2\pi f_d t_2$$

$$\Phi_2 - \Phi_3 = 2\pi f_d t_2 - 2\pi f_d t_3 \text{----------------------------} (7)$$

$$\Phi_{N-1} - \Phi_N = 2\pi f_d t_{N-1} - 2\pi f_d t_N$$

In this case, the sum of the calculated phase change values can be expressed by equation (8) shown below:

$$(\Phi_0 - \Phi_1) + (\Phi_1 - \Phi_2) + (\Phi_2 - \Phi_3) + \cdots + (\Phi_{N-1} - \Phi_N) = \Phi_0 - \Phi_N \text{--} (8)$$

Thus, the receiving side averages the result of equation (8) as shown in equation (9) shown below, whereby the average value can be determined as an average frequency difference value between the transmission frequency and the reception frequency:

$$\frac{\Phi_0 - \Phi_N}{N} = \frac{2\pi f_d (t_0 - t_N)}{N} \text{----------------------------} (9)$$

However, since the intermediate phase values are removed during the process of averaging the phase change values and the average frequency difference value between the transmission frequency and the reception frequency is determined on the basis of only the first and last phase values, the determined average frequency difference value is not as accurate as desired.

A frequency difference measuring method capable of more accurately measuring an average frequency value between a transmission frequency and a reception frequency based on phase change value by calculating the phase change value on the basis of a predetermined sample interval, in accordance with a preferred embodiment of the present invention, will now be described with reference to the accompanying drawings.

In general, in a mobile communication system of an FDD (Frequency Division Duplex) method, an uplink frequency and a downlink frequency that is different than the uplink frequency are used for communication. When a specific channel of a downlink is used, a base station can transmit a well-known signal to a terminal. In this condition, the terminal can measure a frequency difference by using a sufficient amount of signal at any time. For example, in a W-CDMA (Wideband-Code Division Multiple Access) system using the FDD method, the mobile communication system can use a CPICH (Common Pilot Channel),. The CPICH is a channel through which the base station transmits a signal to the terminal.

Accordingly, when the terminal uses the CPICH to measure the frequency difference, it can use a signal having a high SNR (Signal to Noise Ratio) according to a spreading gain, or can use 150 symbols (=38400 chips) for 10 ms.

Additionally, in a mobile communication system of a TDD (Time Division Duplex) method, transmission time of the uplink and the downlink is divided for communication. That is, since the downlink is not allowed during the uplink time, time is limited for the base station to transmit the well-known signal to the terminal. For example, in a mobile communication system of TD-SCDMA (Time Division-Synchronous CDMA) method using TDD, because the available time for using the downlink is limited, the mobile communication system can use only a midamble signal transmitted when a traffic channel is connected. However, when a 12.2 kbps channel is used, the rate taken up by the midamble signal is merely 2.11% (144 chips among 6800 chips for 5 ms) and only a signal having a low SNR should be used.

Thus, a method and apparatus for accurately measuring a frequency difference value is required for a TD-SCDMA mobile communication system, which uses a relatively low quality and small amount of signal.

Embodiments of a method for accurately measuring a frequency difference between the transmission frequency and a reception frequency in the TDD-based mobile communication will now be described.

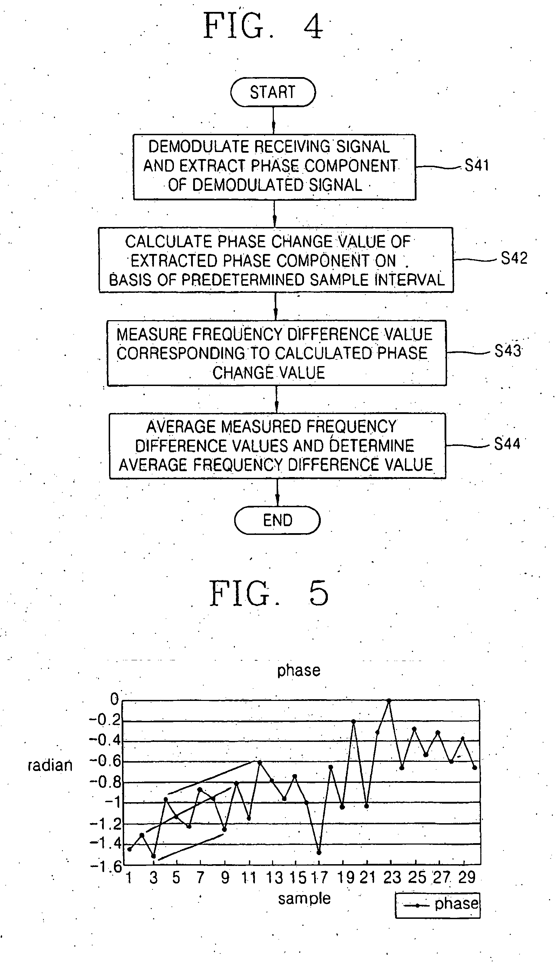

Figure 4 is a flow chart showing an embodiment of a frequency difference measuring method, in accordance with the present invention. As shown in Figure 4, the frequency difference measuring method includes demodulating a received signal and extracting a phase component of the demodulated signal (S41), calculating a phase change value of the extracted phase component on the basis of a predetermined sample interval (S42), measuring a frequency change value corresponding to the calculated phase change value (S43), and averaging the measured frequency change values and determining an average value as an average frequency difference value between a transmission frequency and a reception frequency (S44).

The frequency difference measuring method will now be described in additional detail. First, a receiving side extracts a phase component from the demodulated signal with data $s(t)$ having been removed, as expressed in equation (10) shown below (S41):

$$i(t_n) = e^{j2\pi f_d t_n}, \; herein \; n = 1, 2, \ldots, N \; \text{------------------------} \; (10)$$

Figure 5 is a graph showing a principle of calculating a phase change value of the extracted phase component in accordance with one embodiment of the present invention. As shown in Figure 5, a phase change value expressed in equation (11) shown below is calculated between phase components having a predetermined sample interval (S42):

$$r(t_n) = i(t_n) \cdot i^*(t_{n+k}) = e^{j2\pi f_d t_n} \cdot e^{-j2\pi f_d t_{n+k}} = e^{j2\pi f_d t_n} \cdot e^{-j2\pi f_d (t_n + k)} = e^{-j2\pi k f_d} \; \text{-}(11)$$

A frequency difference value is measured using the calculated phase change value by equation (12) shown below (S43):

$$f_{dn} = \frac{1}{2\pi k} \tan^{-1}\left(\frac{imag(r(t_n))}{real(r(t_n))}\right) \; \text{------------------------} \; (12)$$

Accordingly, the N number of frequency difference values are measured on the basis of the measured frequency difference value, so that the receiving side averages the measured N number of frequency difference values and determines the obtained average value as an average frequency difference value between the transmission frequency and the reception frequency as expressed in equation (13) shown below (S44):

$$F_d = \frac{1}{N-k} \sum_{n=0}^{N-k} f_{dn} \quad \text{------------------------------------------} \quad (13)$$

In this manner, the frequency difference measuring method can measure the average frequency difference between the transmission frequency and the reception frequency on the basis of the phase change value between phase components distanced as long as or longer than the predetermined sample interval. For example, the N number of phase values for measuring the average frequency difference value can be expressed by equation (14) as shown below:

$$\Phi_0 = 2\pi f_d t_0, \; \Phi_1 = 2\pi f_d t_1, \; \Phi_2 = 2\pi f_d t_2, \cdots, \; \Phi_N = 2\pi f_d t_N \quad \text{-------} \quad (14)$$

The phase difference value between phase components distanced as long as or longer than the predetermined sample interval can be expressed by equation (15) as shown below:

$$\Phi_0 - \Phi_k = 2\pi f_d t_0 - 2\pi f_d t_k$$

$$\Phi_1 - \Phi_{k+1} = 2\pi f_d t_1 - 2\pi f_d t_{k+1}$$

$$\Phi_2 - \Phi_{k+2} = 2\pi f_d t_2 - 2\pi f_d t_{k+2}$$

$$\text{-------------------} \quad (15)$$

$$\Phi_{N-k-2} - \Phi_{N-2} = 2\pi f_d t_{N-k-2} - 2\pi f_d t_{N-2}$$

$$\Phi_{N-k-1} - \Phi_{N-1} = 2\pi f_d t_{N-k-1} - 2\pi f_d t_{N-1}$$

$$\Phi_{N-k} - \Phi_N = 2\pi f_d t_{N-k} - 2\pi f_d t_N$$

The sum of the calculated phase change values is expressed by equation (16) shown below:

$$(\Phi_0 - \Phi_k) + (\Phi_1 - \Phi_{k+1}) + (\Phi_2 - \Phi_{k+2}) + \cdots + (\Phi_{k-1} - \Phi_{2k-1}) + (\Phi_k - \Phi_{2k}) +$$

$$(\Phi_{k+1} - \Phi_{2k+1}) + \cdots + (\Phi_{N-2k} - \Phi_{N-k}) + (\Phi_{N-2k+1} - \Phi_{N-k+1}) + \cdots + (\Phi_{N-k-1} - \Phi_{N-1})$$

$$+ (\Phi_{N-k} - \Phi_N) = \sum_{n=0}^{k-1} \Phi_n - \sum_{i=N-k+1}^{N} \Phi_i \quad \text{------------------------------} \quad (16)$$

Accordingly, the receiving side can determine the average frequency difference value between the transmission frequency and the reception frequency by averaging the result of equation (16). At this time, because the receiving side can use the phase values that may be as many as k at the (+) item and as many as k at the (-) item, according to the value of equation (16), the receiving side can determine a relatively accurate frequency difference value.

As described above, the frequency difference measuring method and apparatus according to the present invention has at least the following advantage.

For example, a phase change value is calculated on the basis of a predetermined sample interval, based on which a frequency difference value between a transmission frequency and a reception frequency is accurately determined. Thus, a receiving side can accurately receive data from a sending side, so that a performance of the mobile communication system can be improved.

The foregoing embodiments and advantages are merely exemplary and are not to be construed as limiting the present invention. The present teaching can be readily applied to other types of apparatuses. The description of the present invention is intended to be illustrative, and not to limit the scope of the claims. The invention is defined by the scope of appended claims 1-7.

**Claims**

1. A frequency difference measuring method in a mobile communication system for determining a difference value between a transmission frequency and a reception frequency, comprising:

   demodulating a received signal;
   extracting a plurality of phase components $i(t_n)$ of the demodulated signal using a predetermined sample interval;
   calculating a plurality of phase change values $r(t_n)$, wherein each phase change value is calculated by subtracting from a first extracted phase component $i(t_n)$ a second extracted phase component $i(t_{n+k})$ spaced apart a time interval of k sample intervals from the first extracted phase component (S42);
   determining frequency difference values $f_{dn}$ corresponding to the calculated phase change values (S43); and
   averaging the determined frequency difference values and determining an obtained average value as an average frequency difference value between the transmission frequency and the reception frequency (S44),
   **characterized in that** each sample value $i(t_n)$ of the extracted phase component is only used once for calculating the plurality of phase change values $r(t_n)$.

2. The method of claim 1, wherein the extracted phase component is extracted from the demodulated received signal with data s(t) having been removed, and wherein the extracted phase component is expressed as:

$$i(t_n) = e^{j2\pi f_d t_n}$$

   wherein n=1, 2, ..., N, with N being a number of frequency difference values, and $f_d$ being the frequency difference value.

3. The method of claim 1, wherein each calculated phase change value is expressed as:

$$r(t_n) = e^{j2\pi f_d t_n} \bullet e^{-j2\pi f_d t_{n+k}}$$

   wherein n=1, 2, ..., N, with N being a number of frequency difference values, $f_d$ is the frequency difference value and k is a constant value.

4. The method of claim 3, wherein the frequency difference value is expressed as:

$$f_{dn} = \frac{1}{2\pi k}\tan^{-1}\left(\frac{imag(r(t_n))}{real(r(t_n))}\right).$$

5. The method of claim 4, wherein the averaged determined frequency difference value is expressed as:

$$F_d = \frac{1}{N-k}\sum_{n=0}^{N-k} f_{dn}\ .$$

6. The method of claim 1, wherein the average frequency difference value between the transmission frequency and the reception frequency is determined based on a phase change value between phase components distanced at least as long as the predetermined sample interval.

7. A mobile communication system, comprising:

a demodulator for receiving a modulated input signal and outputting a demodulated signal; and
a frequency difference measuring unit adapted to perform the steps of any one of claims 1 to 6.

**Patentansprüche**

1. Frequenzdifferenzmessverfahren in einem Mobilkommunikationssystem zur Ermittlung eines Differenzwerts zwischen einer Übertragungsfrequenz und einer Empfangsfrequenz, umfassend:

   Demodulieren eines empfangenen Signals,
   Extrahieren einer Mehrzahl Phasenkomponenten $i(t_n)$ des demodulierten Signals unter Verwendung eines vorbestimmten Abtastintervals,
   Berechnen (S42) einer Mehrzahl Phasenänderungswerte $r(t_n)$, wobei jeder Phasenänderungswert berechnet wird, indem von einer ersten extrahierten Phasenkomponente $i(t_n)$ eine zweite extrahierte Phasenkomponente $i(t_{n+k})$ subtrahiert wird, die einen Zeitabstand von k Abtastintervallen von der ersten extrahierten Phasenkomponente besitzt,
   Ermitteln (S43) von Frequenzdifferenzwerten $f_{dn}$ in Entsprechung zu den berechneten Phasenänderungswerten und
   Ausmitteln der ermittelten Frequenzdifferenzwerte und Bestimmen eines erhaltenen Mittelwerts als durchschnittlicher Frequenzdifferenzwert zwischen der Übertragungsfrequenz und der Empfangsfrequenz (S44),
   **dadurch gekennzeichnet, dass** jeder Abtastwert $i(t_n)$ der extrahierten Phasenkomponente lediglich einmal zur Berechnung der Mehrzahl Phasenänderungswerte $r(t_n)$ verwendet wird.

2. Verfahren nach Anspruch 1, wobei die extrahierte Phasenkomponente aus dem demodulierten empfangenen Signal extrahiert wird, wobei Daten s(t) entfernt wurden, und wobei die extrahierte Phasenkomponente ausgedrückt ist als:

$$i(t_n) = e^{j2\pi f_d t_n}$$

wobei n = 1, 2, ..., N, wobei N eine Anzahl von Frequenzdifferenzwerten und $f_d$ der Frequenzdifferenzwert ist.

3. Verfahren nach Anspruch 1, wobei jeder berechnete Phasenänderungswert ausgedrückt ist als:

$$r(t_n) = e^{j2\pi f_d t_n} \bullet e^{-j2\pi f_d t_{n+k}}$$

wobei n = 1, 2, ..., N, wobei N eine Anzahl von Frequenzdifferenzwerten ist, $f_d$ der Frequenzdifferenzwert ist und k ein konstanter Wert ist.

4. Verfahren nach Anspruch 3, wobei der Frequenzdifferenzwert ausgedrückt ist als:

$$f_{dn} = \frac{1}{2\pi k} \tan^{-1} \left( \frac{imag(r(t_n))}{real(r(t_n))} \right).$$

5. Verfahren nach Anspruch 4, wobei der ermittelte durchschnittliche Frequenzdifferenzwert ausgedrückt ist als:

$$F_d = \frac{1}{N-k} \sum_{n=0}^{N-k} f_{dn} \quad .$$

6. Verfahren nach Anspruch 5, wobei der durchschnittliche Frequenzdifferenzwert zwischen der Übertragungsfrequenz und der Empfangsfrequenz ermittelt wird auf Grundlage eines Phasenänderungswerts zwischen Phasenkomponenten, die einen Abstand haben, der mindestens so lang wie das vorbestimmte Abtastintervall ist.

**7.** Mobilkommunikationssystem umfassend:

einen Demodulator zum Empfangen eines modulierten Eingangssignals und Ausgeben eines demodulierten Signals und eine Frequenzdifferenzmesseinheit, welche dazu ausgelegt ist, die Schritte eines der Ansprüche 1 bis 6 auszuführen.

**Revendications**

**1.** Procédé de mesure de différence de fréquence dans un système de communication mobile destiné à déterminer une valeur de différence entre une fréquence de transmission et une fréquence de réception, comprenant les étapes consistant à :

démoduler un signal reçu ;
extraire une pluralité de composantes de phase $i(t_n)$ du signal démodulé en utilisant un intervalle d'échantillonnage prédéterminé ;
calculer une pluralité de valeurs de changement de phase $r(t_n)$, dans laquelle chaque valeur de changement de phase est calculée en soustrayant d'une première composante de phase $i(t_n)$ extraite une deuxième composante de phase $i(t_{n+k})$ extraite espacée d'un intervalle de temps de k intervalles d'échantillonnage de la première composante de phase extraite (S42) ;
déterminer les valeurs de différence de fréquence $f_{dn}$ correspondant aux valeurs de changement de phase calculées (S43) ; et
mettre en moyenne les valeurs de différence de fréquence déterminées et déterminer une valeur moyenne obtenue en tant que valeur de différence de fréquence moyenne entre la fréquence de transmission et la fréquence de réception (S44),
**caractérisé en ce que** chaque valeur d'échantillonnage $i(t_n)$ de la composante de phase extraite est utilisée seulement une fois pour calculer la pluralité de valeurs de changement de phase $r(t_n)$.

**2.** Procédé selon la revendication 1, dans lequel la composante de phase extraite est extraite du signal reçu démodulé avec des données s(t) ayant été supprimées, et dans lequel la composante de phase extraite est exprimée comme suit :

$$i(t_n) = e^{j2\pi f_d t_n}$$

où n = 1, 2, ..., N, N étant un nombre de valeurs de différence de fréquence, et $f_d$ étant la valeur de différence de fréquence.

**3.** Procédé selon la revendication 1, dans lequel chaque valeur de changement de phase calculée est exprimée comme suit :

$$r(t_n) = e^{j2\pi f_d t_n} \cdot e^{-j2\pi f_d t_{n+k}}$$

où n = 1, 2, ..., N, N étant un nombre de valeurs de différence de fréquence, $f_d$ est la valeur de différence de fréquence et k est une valeur constante.

**4.** Procédé selon la revendication 3, dans lequel la valeur de différence de fréquence est exprimée comme suit :

$$f_{dn} = \frac{1}{2\pi k} tan^{-1} \left( \frac{imag\big(r(t_n)\big)}{real\big(r(t_n)\big)} \right)$$

**5.** Procédé selon la revendication 4, dans lequel les valeurs de différence de fréquence déterminées mises en moyenne sont exprimées comme suit :

$$F_d = \frac{1}{N-k} \sum_{n=0}^{N-k} f_{dn}$$

**6.** Procédé selon la revendication 1, dans lequel la valeur de différence de fréquence moyenne entre la fréquence de transmission et la fréquence de réception est déterminée sur la base d'une valeur de changement de phase entre les composantes de phase espacées d'une distance au moins aussi longue que l'intervalle d'échantillonnage prédéterminé.

**7.** Système de communication mobile, comprenant :

un démodulateur destiné à recevoir un signal d'entrée modulé et à délivrer en sortie un signal démodulé ; et une unité de mesure de différence de fréquence adaptée pour exécuter les étapes selon l'une quelconque des revendications 1 à 6.

# FIG. 1

INPUT SIGNAL
(RF)

110

BASEBAND
SIGNAL

130

FREQUENCY DIFFERENCE
MEASURING UNIT

VCO

120

# FIG. 2

**Received Part Phase**

Radian

Chip

Phase

# FIG. 3

phase

radian

sample

-•- phase

# FIG. 4

```
         ( START )
            │
            ▼
┌─────────────────────────────┐
│  DEMODULATE RECEIVING SIGNAL │
│  AND EXTRACT PHASE COMPONENT │──── S41
│    OF DEMODULATED SIGNAL     │
└─────────────────────────────┘
            │
            ▼
┌─────────────────────────────┐
│ CALCULATE PHASE CHANGE VALUE OF │
│  EXTRACTED PHASE COMPONENT ON   │──── S42
│ BASIS OF PREDETERMINED SAMPLE INTERVAL │
└─────────────────────────────┘
            │
            ▼
┌─────────────────────────────┐
│ MEASURE FREQUENCY DIFFERENCE VALUE │
│ CORRESPONDING TO CALCULATED PHASE  │──── S43
│          CHANGE VALUE              │
└─────────────────────────────┘
            │
            ▼
┌─────────────────────────────┐
│   AVERAGE MEASURED FREQUENCY   │
│  DIFFERENCE VALUES AND DETERMINE │──── S44
│ AVERAGE FREQUENCY DIFFERENCE VALUE │
└─────────────────────────────┘
            │
            ▼
         ( END )
```

# FIG. 5

phase

radian / sample

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5982809 A

- WO 0186904 A1